Europäisches Patentamt

(19) European Patent Office

Office européen des brevets

(11) Publication number: **0 049 153**
**B1**

(12) **EUROPEAN PATENT SPECIFICATION**

(45) Date of publication of patent specification: **08.03.89**

(51) Int. Cl.⁴: **G 05 B 19/40, G 05 D 3/20**

(21) Application number: **81304485.6**

(22) Date of filing: **29.09.81**

(54) **Apparatus for correcting positional error.**

(30) Priority: **30.09.80 JP 136610/80**

(43) Date of publication of application:
**07.04.82 Bulletin 82/14**

(45) Publication of the grant of the patent:
**08.03.89 Bulletin 89/10**

(84) Designated Contracting States:
**DE FR GB**

(56) References cited:
**FR-A-1 574 525**
**GB-A-1 142 774**

(73) Proprietor: **FANUC LTD**
**3580, Shibokusa Aza-Komanba Oshino-mura**
**Minamitsuru-gun Yamanashi 401-05 (JP)**

(72) Inventor: **Ryoichiro, Nozawa**
**12-1-2105, Sarugaku-cho**
**Shibuya-ku Tokyo (JP)**
Inventor: **Hideaki, Kawamura**
**1375-5, Narahara-cho**
**Hachioji-shi Tokyo (JP)**

(74) Representative: **Billington, Lawrence Emlyn**
**et al**
**HASELTINE LAKE & CO Hazlitt House 28**
**Southampton Buildings Chancery Lane**
**London WC2A 1AT (GB)**

The file contains technical information
submitted after the application was filed and
not included in this specification

## Description

This invention relates to apparatus for correcting a positional error, for example but not exclusively, in a numerical control device of the type used to control a machine tool.

When controlling the feed of a workpiece table in a machine tool such as a lathe, positional errors stemming from such mechanical phenomena as pitch error and backlash can occur. A numerical control device ordinarily is furnished with pitch error and backlash correction functions that the numerical control device relies upon to correct positional errors when controlling a machine tool. One method of correcting pitch error is disclosed in JP—A—50-63381, in which the correction is effected by purely electrical means. Specifically, a mechanically movable body has several so-called control axes along which the body can be moved. The body may, for example, be capable of movement along the X and Y axes. In the aforesaid method, the range of movement along each axis is divided into a plurality of segments. For example, the movable range of the body along the X-axis is divided into $AX_i$ segments (where $i=1, 2,...$), and pitch error correction factors $EX_i$ ($i=i, 2,...$) are stored in memory so as to correspond to each of said segments. Then, when the movable body is moved along the X-axis so that the current position of the body lies on a prescribed segment $AX_i$, the pitch error correction factor $EX_i$ corresponding to that segment is read out of the memory, the current position of the body along the X-axis being corrected on the basis of the correction factor $EX_i$ and the direction of movement, i.e., in the plus or minus direction. This method enables the correction along the X-axis to be effected in a highly accurate manner without requiring such mechanical elements as dogs and limit switches.

A characteristic of the aforesaid conventional pitch error correction system is that the pitch error correction factor for a correction along one control axis, such as the correction factor $EX_i$ for the X-axis, depends solely upon the current position of the movable body on said axis and is independent of the current position along the other axes, such as the Y-axis in the above example. In other words, in the foregoing correction system, pitch error correction factors $E_x$, $E_y$, $E_z$ for corrections along the respective X, Y and Z axes are expressed as follows: $E_x=f_x(x)$, $E_y=fy(y)$, $E_z=f_z(z)$. This means that a highly precise positional correction cannot be performed with the conventional system described above in a case where the pitch error correction factor for a certain control axis depends not only upon the current position along said control axis, but upon the current position of the movable body along the other control axes as well.

GB—A—1 142 774 discloses a numerically controlled device in which positional error is corrected according to a 2-d grid of reference points. In respect of each reference point X and Y correction factors are stored and applied.

According to a first aspect of the present invention there is provided a positional error correcting arrangement, for correcting positional errors of a movable member, which is positionally controlled with respect to two control axes, to be positioned within a control region, comprising:

means for indicating an instantaneous position of the controlled member within the control region,

position error correcting means including memory means storing corrective amounts to be used in correcting positional errors of said controlled member with respect to each of the control axes, said corrective amounts for each axis being simultaneously dependent upon the position of said controlled member with respect to all of the control axes, and

means for applying said corrective amounts to servo actuators responsible for positionally controlling said controlled member,

characterised in that

the position error correcting means comprise at least two position error correcting circuits one for each control axis, whereby the positional errors specific to the movements of said controlled member along one of said control axes are corrected through one of said position error correcting circuits,

and in that

each one of said position error correcting circuits comprises:

memory means storing specific corrective amounts to be used in correcting positional errors specific to the movements of said controlled member along that one control axis for which said one position error correcting circuit is provided, said specific corrective amounts being stored, in said memory means at specific addresses corresponding each to a specific respective sub-region of said control region,

address converting means operable to convert the indicated instantaneous position of said control member into the specific memory address corresponding to the specific sub-region which includes the said indicated instantaneous position, for accessing said memory means to obtain the corresponding specific corrective amount;

whereby, for the purpose of storing in each of said memory means said specific corrective amounts to be used for correcting positional errors specific to the movements of said controlled member along each respective one of said control axes, said control region is subdivided into at least two pluralities of sub-regions, each of said pluralities of sub-regions extending to include the whole control region,

said sub-regions in said at least two pluralities being different from each other in respect of their shape and/or geometrical extension,

said at least two pluralities of sub-regions providing thus for at least two subdivisions of the whole control region which may be different from each other, and

whereby said address converting means in the respective position error correcting circuits convert the said indicated instantaneous position into at least two different specific addresses, one for each control axis, to access, in the respective memory means, those specific corrective amounts to be used for correcting said positional errors specific to the movements of said controlled member along that one of said control axes for which the error correcting circuit concerned is provided.

According to a second aspect of the present invention there is provided a positional error correcting arrangement, for correcting positional errors of a movable member, which is positionally controlled with respect to two control axes, to be positioned within a control region, comprising:

means for indicating an instantaneous position of the controlled member within the control region,

position error correcting means including memory means storing corrective amounts to be used in correcting positional errors of said controlled member with respect to each of the control axes, said corrective amounts for each axis being simultaneously dependent upon the position of said controlled member with respect to all of the control axes, and

means for applying said corrective amounts to servo actuators responsible for positionally controlling said movable member,

characterised in that,

the position error correcting means comprise at least two position error correcting circuits, one for each control axis, whereby the positional errors specific to the movements of said controlled member along one of said control axes are corrected through one of said position error correcting circuits,

and in that

each one of said position error correcting circuits comprises:

memory means storing specific corrective values to be used in correcting positional errors specific to the movements of said controlled member along that one control axis for which said one position error correcting circuit is provided, said specific corrective values being stored, in said memory means, at specific addresses corresponding each to a specific respective segment of each of the control axes,

address converting means, operable to convert the indicated instantaneous position to specific sets of memory addresses, one set for each control axis, corresponding to the specific segment of the control axis which includes the said indicated instantaneous position, for accessing said memory means to obtain the corresponding specific corrective values, and

means operable to combine said specific corrective values to provide a specific corrective amount,

whereby, for the purpose of storing in each of said memory means said specific corrective values to be combined to provide said specific corrective amount to be used for correcting positional errors specific to the movements of said controlled member along respectively each one of said control axes, the length of each of said control axes, included in said control region is subdivided into at least two pluralities of segments,

said segments, in each of said at least two pluralities, being different from each other in respect of their lengths and being disposed, along each one of said control axes, in an order which may be different from one plurality to the other so that said control region is subdivided into at least two pluralities of sub-regions, each of said pluralities of sub-regions extending to include the whole control region,

said sub-regions, in each of said at least two pluralities, being similar to each other in respect to their shape but different from each other in respect to their geometrical extension,

said at least two pluralities of sub-regions providing thus for at least two subdivisions of the whole control region which may be different from each other, and

whereby said address converting means, in the position error correcting circuits, convert said indicated instantaneous position into at least two different sets of specific addresses, one address in each set for each control axis, to access, in the respective memory means, those specific corrective values to be combined to provide that specific corrective amount to be used in correcting said positional errors specific to the movements of said controlled member along that one control axis for which the relevant position error correcting circuit is provided.

An example of the present invention may provide a positional error correction method for accurate correction of pitch error in a numerically controlled machine tool even when the pitch error correction factor for correction along a specific control axis depends not only upon the current position of a movable body along said control axis but upon the current position of the movable body along the other control axes as well.

An embodiment of the present invention may provide an error correction apparatus in a numerical control system, provided with a function which enables an accurate pitch error correction even when the pitch error correction factor for a specific control axis of a numerically controlled machine tool depends not only upon the current position of a movable body along said control axis, but also upon the current position of the movable body along the other control axes of the machine tool.

In accordance with an embodiment of the present invention, a numerical control system, which is adapted to control a machine tool having a movable body whose movement is controlled along at least two control axes, may be provided with an error correction circuit for producing a correction factor decided on the basis of the position of the movable body along one control axis, i.e., the axis along which the machine tool is being positionally controlled as well as the position of the movably body along the other control axis or axes, the error correction circuit delivering an output signal, indicative of the correction factor, at the time of a positional control operation along said one control axis, thereby to correct the positional error of the machine tool.

Other features and advantages of examples of the present invention will be apparent from the following description taken in conjunction with the accompanying drawings, in which:

Fig. 1 is a block diagram illustrating an error correction system in accordance with the present invention;

Fig. 2 is a block diagram illustrating an embodiment of a pitch error correction circuit in accordance with the present invention; and

Fig. 3 is a block diagram illustrating another embodiment of a pitch error correction circuit in accordance with the present invention.

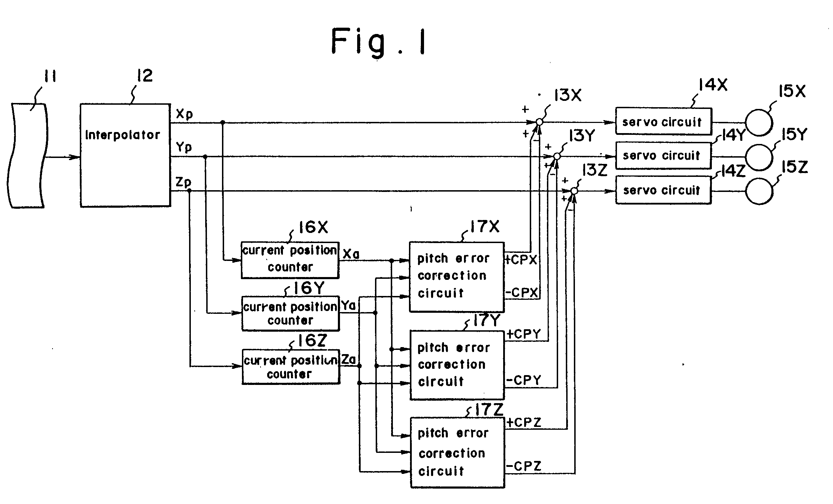

Referring first to Fig. 1, there is shown an interpolator 12 which produces distributed pulses $X_p$, $Y_p$, $Z_p$ by performing a pulse distribution operation on the basis of movement commands received from a paper tape 11 bearing a punched machining program. Pulse mixing circuits 13X, 13Y, 13Z receive the distributed pulses $X_p$, $Y_p$, $Z_p$ from the interpolator 12 and mix them with corrective pulses CPX, CPY, CPZ respectively, which will be described below. Well-known servo circuits 14X, 14Y, 14Z, which receive the outputs of the respective pulse mixing circuits 13X, 13Y, 13Z, have their outputs connected to respective servo motors 15X, 15Y, 15Z. Current position counters 16X, 16Y, 16Z, which are reversible counters, are adapted to count up or to count down the respective distributed pulses $X_p$, $Y_p$, $Z_p$ in accordance with the sign thereof, the value of the count within each counter indicating the commanded current position of a movable body along the X, Y, and Z axes, the commanded current position meaning the position currently occupied by the movable body as a result of the command received by the interpolator 12. In other words, the counters 16X, 16Y, 16Z store the commanded current positions $X_a$, $Y_a$, $Z_a$, along the aforesaid three axes, of the movable body, these values being delivered to pitch error correction circuits 17X, 17Y, 17Z, respectively, which generate corrective pulses +CPX, −CPX etc. for corrections along the three axes X, Y, Z. Here we will assume that the pitch error along the X-axis is dependent upon the current position of the movable body along the X-axis and along the Y and Z axes as well, that the pitch error along the Y-axis is dependent upon the current position of the movable body along the Y-axis and along the X and Z axes as well, and that the pitch error along the Z-axis is dependent upon the current position of the movable body along Z-axis and along the X and Y axes as well. The pitch error correction factors $E_x$, $E_y$, $E_z$ for each of these axes may then be expressed as follows:

$$E_x = f_x(x_a, y_a, z_a)$$

$$E_y = f_y(x_a, y_a, z_a)$$

$$E_z = f_z(x_a, y_a, z_a)$$

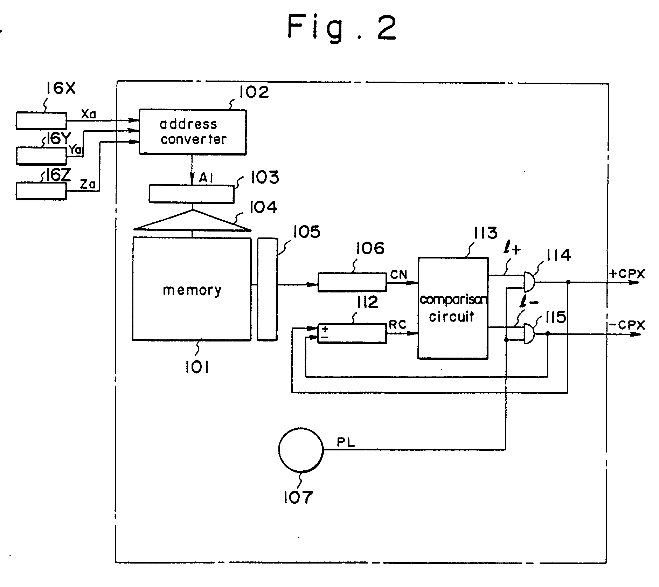

The pitch error correction circuits 17X, 17Y, 17Z have identical circuit configurations, one of the circuits being shown in Fig. 2.

The pitch error correction circuit (17X in Fig. 1) shown in Fig. 2 includes a memory 101 for storing corrective values. The memory 101 is adapted to store, in the form of a three-dimensional matrix, so-called "absolute" corrective values which correspond to respective sub-regions of space obtained by dividing three-dimensional space into a multiplicity of smaller regions, i.e., "sub-regions". An address converter 102 converts the current position (a point defined by $X_a$, $Y_a$, $Z_a$) of the movable body into an address of the location in the memory 101 which stores the corrective value corresponding to the sub-region to which said current position belongs. An address register 103 stores the address obtained from the address converter 102. A decoder 104 is disposed between the memory 101 and the address register 103. The memory 101 is connected to a read control circuit 105 which is in turn connected to a presettable register 106 in which a corrective value CN read out of the memory 101 is preset. Numeral 107 denotes an oscillator for generating pulses PL whose function will be described below. A reversible counter 112 has its content up-counted by +1 each time a positive corrective pulse +CPX is generated, for a correction in the positive direction and down-counted each time a negative corrective pulse −CPX is generated for a correction in the negative direction. This will be described in further detail below. A comparator circuit 113 compares the content CN of the register 106 and the content RC of the reversible counter 112 and delivers logical "1" on line I+ when CN>RC holds, logical "1" on line I− when CN<RC holds, and logical "0" on both lines I+, I− when CN=RC holds, i.e., when CN and RC coincide. AND gates are designated at numerals 114, 115. When CN>RC holds, AND gate 114 delivers, as the positive corrective pulses +CPX, pulses PL which are generated by the oscillator 107. When RC<CN holds, AND gate 115 delivers the pulses PL from the oscillator 107 as the negative corrective pulses −CPX. It should be noted that the pitch error correction circuits 17X through 17Z are identically constructed as mentioned above. The sub-regions of space may differ from one another, however, as may the corrective values assigned to them and stored in memory 101.

A pitch error correction in accordance with the present examples of the invention proceeds as follows. The interpolator 12, upon receiving a movement command specified by the paper tape 11, performs a pulse distribution operation and feeds distributed pulses $X_p$, $Y_p$, $Z_p$ to the servo circuits 14X, 14Y, 14Z through the pulse mixing circuits 13X, 13Y, 13Z, the servo circuits responding by driving the servo motors 15X, 15Y, 15Z rotatively. The servo motors rotate table drive lead screws which in turn transport the machine tool table along the X, Y and Z axes. The distributed pulses $X_p$, $Y_p$, $Z_p$, in concurrence with the foregoing operation, enter the respective current position counters 16X, 16Y, 16Z which store the thus commanded current position of the table in terms of the values $X_a$, $Y_a$, $Z_a$ along each of the control axes. This is accomplished by up-counting or down-counting the distributed pulses in accordance with their sign. The values $X_a$, $Y_a$, $Z_a$ specifying the commanded current position of the table enter each one of the pitch error correction circuits 17X through 17Z. The address converter 102 in each pitch error correction circuit converts the current table position into an address $A_i$ which conforms to the sub-region of space to which the current table position belongs, the address $A_i$ then being set in the address register 103. When the current table position changes from one sub-region of space to the next sub-region, therefore, the address corresponding to the latter sub-region is set in the address register 103. When this has been accomplished, the address register 103 addresses the memory 101 by specifying the address $A_i$. The read control circuit 105 reads the corrective value at said address from the memory 101 and sets it in the register 106. The comparator 113 constantly compares the content CN of register 106 with the content RC of the reversible counter 112. The inputs CN, RC to the comparator 113 become unequal when the corrective value from memory 101 is set in the register 106. If we assume that the corrective value set in register 106 establishes the inequality CN>RC, the comparison circuit 113 delivers logical "1" on line I+, thereby opening AND gate 114. As a result, pulses PL generated by the oscillator 107 pass through the open AND gate 114 and are delivered as the corrective pulses +CPX for a forward correction. The pulses simultaneously enter the reversible counter 112 and increment its content RC until the equality CN=RC is established, at which time the comparator 113 detects the coincidence between CN and RC to close AND gate 114 and block the passage of the pulses PL, thereby halting delivery of the corrective pulses +CPX. This ends the pitch error correction along the X axis. Note that the corrective pulses +CPX for the correction in the positive direction were delivered in the foregoing because of the assumption CN>RC. When the inequality CN<RC is the case owing to the corrective value set in register 106, the coincidence circuit 113 will open AND gate 115 to deliver the corrective pulses −CPX for negative correction along the X axis. The backward correction is then performed in the same manner as the forward correction until the equality CN=RC is restored.

A better understanding of the foregoing can be had by using numerical values to describe a corrective operation. Thus, for first, second and third sub-regions of space $SP_1$, $SP_2$, $SP_3$ which adjoin one another in the order named, let the corresponding corrective values be 10, 7 and 9, respectively. These values are stored in memory 101. When the table of the machine tool moves from the origin and enters the first sub-region of space $SP_1$ where the current position of the table is given by $(X_a, Y_a, Z_a)$, the numerical value "10" is read out of memory 101 and set in the register 106. CN is greater than RC so that the comparator circuit 113 opens AND gate 114 to permit the passage of ten corrective pulses +CPX (i.e., the oscillator output pulses PL) which correct the pitch error by applying a correction in the positive direction. Only ten corrective pulses are delivered because the pulses are coupled also to the reversible counter 112 whose content is consequently up-counted from zero to the numerical value "10" which is equivalent to the corrective value for the first subregion $SP_1$. This establishes the equality CN=RN, closing the AND gate 114 and therefore interrupting the flow of pulses. Then, as the table is moved so that the commanded current position is located in the second sub-region of space $SP_2$, the numerical value "7" is set in register 106, and the comparator circuit 113 opens AND gate 115 since CN ("7") is now smaller than RC ("10"), i.e., CN<RC. The AND gate 115 therefore delivers three corrective pulses −CPX to correct the pitch error in the negative direction. The content of reversible counter 112, owing to the sign of the corrective pulses −CPX, is down-counted from "10" to the numerical value "7", which is the corrective value corresponding to the second sub-region $SP_2$. Next, when the current table position shifts to the third sub-region of space $SP_3$, the numerical value "9" is set in register 106, and the comparator 113 opens AND gate 114 since CN ("9") is now greater than RC ("7"). The AND gate 114 therefore delivers two corrective pulses +CPX to correct the pitch error in the positive direction. The content of reversible counter 112 is up-counted from "7" to "9", which is the corrective value corresponding to the third sub-region $SP_3$. Corrective operations for fourth and subsequent sub-regions proceed in similar fashion. Thus, a pitch error correction ends when the value of the count in reversible counter 112 agrees with the corrective value corresponding to the particular sub-region of space. It will also be appreciated that the value of the count in counter 112 is the arithmetic difference between the number of forward corrective pulses and the number of backward corrective pulses, and that this represents the actual correction factor. This enables pitch error to be corrected in an accurate manner.

When the AND gate 114 delivers the corrective pulses +CPX in the manner described above, the mixing circuit 13X in Fig. 1 adds pulses, equivalent in number to the pulses +CPX, to the distributed pulses $X_p$ produced by the interpolator 12, thereby increasing the total number of pulses applied to the servo circuit 14X. On the other hand, when the AND gate 15 delivers the corrective pulses −CPX, the mixing circuit 13X subtracts pulses, equivalent in number to the corrective pulses −CPX, from the distributed pulses, $X_p$,

thereby decreasing the total number of pulses applied to the servo circuit 14X. A corrective operation of this type is performed by pitch error correction circuit 17Y and pulse mixing circuit 13Y, and by pitch error correction circuit 17Z and pulse mixing circuit 13Z, thereby to correct the position of the table along all three control axes. This positional correction is executed each time the table moves from one sub-region of space to another.

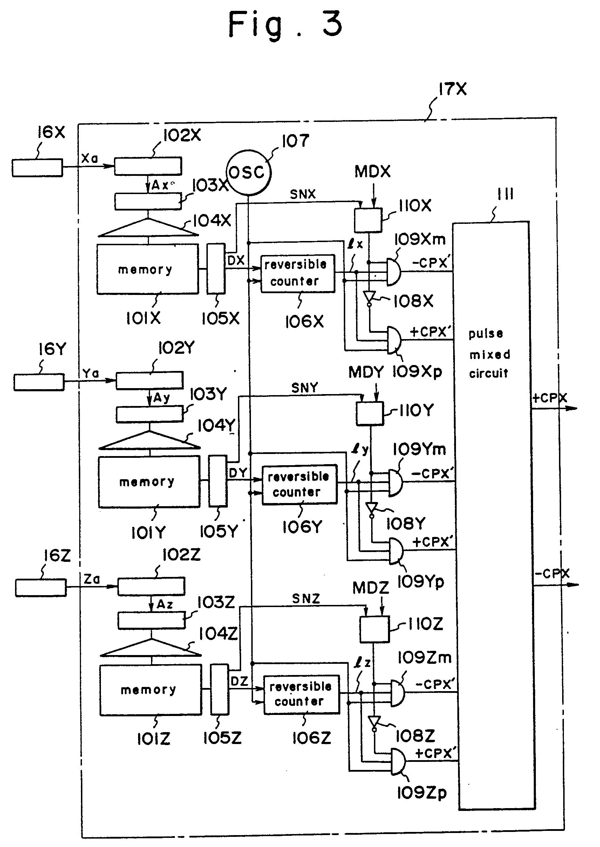

Fig. 3 is a block diagram useful in describing pitch error correction circuits 17X, 17Y, 17Z for a case where the pitch error correction factors $E_x$, $E_y$, $E_z$ may be expressed as follows:

$$E_x = f_x(x_a, y_a, z_a) = f_x(x_a) + g_x(y_a) + h_x(z_a)$$

$$E_y = f_y(x_a, y_a, z_a) = f_y(x_a) + g_y(y_a) + h_y(z_a)$$

$$E_z = f_z(x_a, y_a, z_a) = f_z(x_a) + g_z(y_a) + h_z(z_a)$$

The pitch error correction circuits 17X, 17Y, 17Z are identical in construction. Segments along the control axes may differ from one another, as may the corrective values assigned to respective segments and stored in memory, as will be described below. It will therefore be necessary to describe only one of the correction circuits, specifically the correction circuit 17X.

As shown in Fig. 3, pitch error correction circuit 17X includes memories 101X, 101Y, 101Z for storing the signed corrective values $f_x(x)$, $g_x(y)$, $h_x(z)$, respectively. The range of table movement along each of the X, Y and Z control axes is divided into a plurality of segments, and a corrective value is assigned to each segment. Corrective values, as well as their signs, corresponding to the segments along the X-axis are stored in memory 101X. Similarly, corrective values, as well as their signs, corresponding to the segments along the Y-axis are stored in memory 101Y, and corrective values, as well as their signs, corresponding to the segments along the Z-axis are stored in memory 101Z. Each corrective value is a so-called incremental corrective value. Accordingly, when the table moves to a position located on a certain segment, pulses are generated, as will be described below, for a correction in the positive or negative direction by an amount corresponding to the corrective value for said segment. The sign of the corrective value indicates the direction of the correction for a case where the table is moving in the positive direction. When the table is moving in the negative direction, therefore, the direction of the correction will be the reverse of the sign. Address converters 102X, 102Y, 102Z are provided for the respective memories 101X, 101Y, 101Z. The address converter 102X converts the current table position $X_a$ along the X-axis into an address $A_x$ corresponding to the segment to which $X_a$ belongs. Similarly, the address converters 102Y, 102Z convert the current positions $Y_a$, $Z_a$ along the Y and Z axes into addresses $A_y$, $A_z$ corresponding to the segments to which $Y_a$ and $Z_a$ belong, respectively. The addresses $A_x$, $A_y$, $A_z$ are set in address registers 103X, 103Y, 103Z, respectively. Numerals 104X, 104Y, 104Z denote decoders, and numerals 105X, 105Y, 105Z denote read control circuits. Corrective values DX, DY, DZ, which have been read out of the respective memories 101X, 101Y, 101Z by the read control circuits, are preset in respective presettable reversible counters 106X, 106Y, 106Z, the content of each reversible counter being down-counted by one count each time an oscillator 107 generates a pulse. The reversible counters 106X, 106Y, 106Z have respective output lines $l_x$, $l_y$, $l_z$. A reversible counter delivers a "0" on its output line when its content is zero, and a "1" when its content is non-zero. NOT gates are designated at 108X, 108Y, 108Z, and AND gates at 109Xp, 109Xm, 109Yp, 109Ym, 109Zp, 109Zm. Numerals 110X, 110Y, 110Z denote exclusive-OR gates whose respective inputs are the signs SNX, SNY, SNZ of the corrective values DX, DY, DZ, as well as directional signals MDX, MDY, MDZ. The signs SNX, SNY, SNZ are read out of the respective memories 101X, 101Y, 101Z along with the corrective values DX, DY, DZ. The directional signals MDX, MDY, MDZ indicate the direction of table movement. MDX is a "1" for table movement in the +X direction and a "0" for movement in the −X direction, MDY is a "1" for table movement in the +Y direction and a "0" for table movement in the −Y direction, and MDZ is a "1" for movement in the +Z direction and a "0" for movement in the −Z direction. The signs SNX, SNY, SNZ are logical "1" when positive, and logical "0" when negative. Numeral 111 denotes a combining circuit which combines the positive corrective pulses +CPX' from the AND gates 109Xp, 109Yp, 109Zp and the negative corrective pulses −CPX' from the AND gates 109Xm, 109Ym, 109Zm, thereby to produce corrective pulses +CPX for a positive correction and corrective pulses −CPX for a negative correction.

In operation, the current position counters 16X, 16Y, 16Z store the current position of the table in terms of the values $X_a$, $Y_a$, $Z_a$ along the respective control axes X, Y, Z. The address converters 102X, 102Y, 102Z receive the values $X_a$, $Y_a$, $Z_a$ and convert them into addresses $A_x$, $A_y$, $A_z$ which correspond to the respective segments on which the above values lie. When the interpolator 12 in Fig. 1 generates the distributed pulses $X_p$ for moving the table in the +X direction, the distributed pulses are coupled to the servo circuit 14X through the pulse mixing circuit 13X to drive the servo motor 15X, whereby the table is transported in the +X direction. At the same time, the distributed pulses $X_p$ enter the counter 16X and increment its content. When the current position $X_a$ along the X-axis moves from one segment to the next adjacent segment, the address converter 102X generates the address Ax corresopnding to the latter segment and sets this address in the address register 103X, which now addresses the memory 101X accordingly. As a result, the read control circuit 105X reads, from the address $A_x$ of the memory 101X, the pitch error corrective value DX as well as its sign SNX, the corrective value DX being that which has been assigned to the segment just occupied by the commanded current position of the table. The read control circuit 105X presets the corrective value DX in the reversible counter 106X and applies the sign SNX (assumed here to be logical "1") to the exclusive-OR gate 110X. Since the content of counter 106X is now non-zero, a "1" appears on its output line $I_x$. Further, since the sign SNX is a "1" (positive) and the directional signal MDX is a "1" (indicating movement in the positive direction), the exclusive-OR gate 110X delivers a "0" which causes the AND gate 109Xp to open. The open gate 109X$_p$ permits the pulses PL generated by the oscillator 107 to enter the pulse mixing circuit 111 as the corrective pulses +CPX'. The content of reversible counter 106X is decremented by one count each time a pulse PL is generated. The delivery of the corrective pulses +CPX' ends when the content of counter 106X is counted down to zero. When the sign SNX of the corrective value DX is positive (logical "1") and pulses are being distributed in the −X direction, so that the directional signal MDX is logical "0", the output of the exclusive-OR gate 110X is logical "1". Therefore AND gate 109Xm is opened instead of AND gate 109Xp and delivers the corrective pulses −CPX', produced in the same manner as the corrective pulses +CPX' as described above.

The foregoing description deals with a pulse distribution operation solely along the X-axis. When pulses are distributed simultaneously along two control axes, or simultaneously along three control axes, the AND gates 109Yp, 109Ym, 109Zp, 109Zm, also deliver the corrective pulses +CPX', −CPX' which enter the pulse mixing circuit 111 and are mixed with the distributed pulses, thereby to provide the corrective pulses +CPX, −CPX. The pitch error correction circuits 17Y and 17Z operate in the same manner as the pitch error correction circuit 17X to produce the corrective signals +CPY, −CPY, +CPZ, −CPZ.

It should be obvious from the foregoing description that examples of the present invention enable pitch error to be corrected in accurate fashion to permit highly precise numerical control of a machine tool even when the pitch error along a certain control axis is dependent not only upon the current position along said control axis but also upon the current position along the other control axes.

It should be understood that the foregoing description relates to preferred embodiments of the disclosed invention and that various changes and modifications may be made without departing from the spirit and scope of the invention. For example, it was described above that the corrective pulses are generated on the basis of the current position of the movable body, such as a table, following a command to move the body. However, it is possible to adopt an arrangement wherein the corrective pulses are generated on the basis of the actual position of the movable body as obtained by supplying the current position counters with signals that indicate where the movable body is actually located at any given time, irrespective of commands.

It should also be understood that the invention is not restricted to the correction of pitch errors; other types of error may be corrected in an analogous fashion.

In general terms, there has been described and illustrated a positional error correction system applicable to numerical control wherein a machine tool is controlled along more than one control axis, such as along X and Y control axes. If the machine tool is to be positionally controlled along the X-axis, the position of the machine tool along the X-axis is corrected by a correction factor decided on the basis of the position of the machine tool along that axis and the position of the machine tool along the Y-axis, whereby a positional correction is effected in a highly accurate manner. The control axes of the machine tool may include a Z-axis and thus are not restricted to merely the X and Y axes. In such case the positional correction may be performed using a correction factor decided on the basis of the machine tool position along all three axes.

## Claims

1. A positional error correcting arrangement, for correcting positional errors of a movable member, which is positionally controlled with respect to two control axes (X, Y, Z), to be positioned within a control region, comprising:
means (12, 16X, 16Y, 16Z) for indicating an instantaneous position (Xa, Ya, Za) of the controlled member within the control region,
position error correcting means (17X, 17Y, 17Z) including memory means (101) storing corrective amounts to be used in correcting positional errors of said controlled member with respect to each of the control axes, said corrective amounts for each axis being simultaneously dependent upon the position (Xa, Ya, Za) of said controlled member with respect to all of the control axes, and
means for applying said corrective amounts to servo actuators responsible for positionally controlling said controlled member,
characterized in that
the position error correcting means comprise at least two position error correcting circuits (17X, 17Y, 17Z), one for each control axis, whereby the positional errors specific to the movements of said controlled member along one (e.g. X) of said control axes are corrected through one (e.g. 17X) of said position error correcting circuits,
and in that
each one of said position error correcting circuits (17X, 17Y, 17Z) comprises:
memory means (101) storing specific corrective amounts to be used in correcting positional errors specific to the movements of said controlled member along that one control axis (e.g. X) for which said one position error correcting circuit (e.g. 17X) is provided, said specific corrective amounts being stored, in said memory means (101), at specific addresses corresponding each to a specific respective sub-region of said control region,

address converting means (102) operable to convert the indicated instantaneous position (Xa, Ya, Za) of said control member into the specific memory address corresponding to the specific sub-region which includes the said indicated instantaneous position, for accessing said memory means (101) to obtain the corresponding specific corrective amount;

whereby, for the purpose of storing in each of said memory means (101) said specific corrective amounts to be used for correcting positional errors specific to the movements of said controlled member along each respective one of said control axes (X, Y, Z), said control region is subdivided into at least two pluralities of sub-regions, each of said pluralities of sub-regions extending to include the whole control region,

said sub-regions in said at least two pluralities being different from each other in respect of their shape and/or geometrical extension,

said at least two pluralities of sub-regions providing thus for at least two subdivisions of the whole control region which may be different from each other, and

whereby said address converting means (102) in the respective position error correcting circuits (17X, 17Y, 17Z) convert the said indicated instantaneous position (Xa, Ya, Za) into at least two different specific addresses, one for.each control axis, to access, in the respective memory means (101), those specific corrective amounts to be used for correcting said positional errors specific to the movements of said controlled member along that one of said control axes (e.g. X) for which the error correcting circuit (e.g. 17X) concerned is provided.

2. A positional error correcting arrangement, for correcting positional errors of a movable member, which is positionally controlled with respect to two control axes (X, Y, Z), to be positioned within a control region, comprising:

means (12, 16X, 16Y, 16Z) for indicating an instantaneous position (Xa, Ya, Za) of the controlled member within the control region,

position error correcting means (17X, 17Y, 17Z) including memory means (101X, 101Y, 101Z) storing corrective amounts to be used in correcting positional errors of said controlled member with respect to each of the control axes, said corrective amounts for each axis being simultaneously dependent upon the position (Xa, Ya, Za) of said controlled member with respect to all of the control axes, and

means for applying said corrective amounts to servo actuators (14X, 14Y, 14Z; 15X, 15Y, 15Z) responsible for positionally controlling said movable member,

characterised in that,

the position error correcting means comprise at least two position error correcting circuits (17X, 17Y, 17Z), one for each control axis, whereby the positional errors specific to the movements of said controlled member along one (e.g. X) of said control axes are corrected through one (e.g. 17X) of said position error correcting circuits,

and in that

each one of said position error correcting circuits (17X, 17Y, 17Z) comprises:

memory means (101X, 101Y, 101Z) storing specific corrective values to be used in correcting positional errors specific to the movements of said controlled member along that one contròl axis (e.g. X) for which said one position error correcting circuit (e.g. 17X) is provided, said specific corrective values being stored, in said memory means (101X, 101Y, 101Z), at specific addresses corresponding each to a specific respective segment of each of the control axes,

address converting means (102X, 102Y, 102Z) operable to convert the indicated instantaneous position (Xa, Ya, Za) to specific sets of memory addresses, one set for each control axis, corresponding to the specific segment of the control axis which includes the said indicated instantaneous position, for accessing said memory means (101X, 101Y, 101Z) to obtain the corresponding specific corrective values, and

means (111) operable to combine said specific corrective values to provide a specific corrective amount,

whereby, for the purpose of storing in each of said memory means (101X, 101Y, 101Z) said specific corrective values to be combined to provide said specific corrective amount to be used for correcting positional errors specific to the movements of said controlled member along respectively each one of said control axes (X, Y, Z), the length of each of said control axes, included in said control region is subdivided into at least two pluralities of segments,

said segments, in each of said at least two pluralities, being different from each other in respect of their lengths and being disposed, along each one of said control axes, in an order which may be different from one plurality to the other so that said control region is subdivided into at least two pluralities of sub-regions, each of said pluralities of sub-regions extending to include the whole control region,

said sub-regions, in each of said at least two pluralities, being similar to each other in respect to their shape but different from each other in respect to their geometrical extension,

said at least two pluralities of sub-regions providing thus for at least two subdivisions of the whole control region which may be different from each other, and

whereby said address converting means (102X, 102Y, 102Z), in the position error correcting circuits (17X, 17Y, 17Z), convert said indicated instantaneous position (Xa, Ya, Za) into at least two different sets of specific addresses, one address in each set for each control axis, to access, in the respective memory means (101X, 101Y, 101Z), those specific corrective values to be combined to provide that specicic corrective amount to be used in correcting said positional errors specific to the movements of said controlled member along that one control axis (e.g. X) for which the relevant position error correcting circuit (e.g. 17X) is provided.

3. An arrangement as claimed in claim 1 or 2, wherein the controlled member is positionally controlled with respect to three control axes (X, Y, Z), the control region is three-dimensional, and three position error correction circuits (17X, 17Y, 17Z) are provided.

4. An arrangement as claimed in claim 1, or claim 3 when read as appended to claim 1, wherein each position error correction circuit (e.g. 17X) comprises:

reading means (105) operable to read out corrective amounts from the memory means (101),

temporary storage means (106) operatively connected to said reading means (105) for temporarily storing each corrective amount read out of said memory (101) and for providing, as an output, a signal indicative of the stored corrective amount;

a pulse generator circuit 107;

counting means (112) operatively connected to said pulse generator circuit (107) for counting pulse signals therefrom and providing, as an output, a signal indicative of the count:

comparison means (113) operatively connected to said temporary storage means (106) and to said counting means (112) for comparing their outputs and providing, as an output, a signal indicating whether the output of said temporary storage means (106) is greater than or less than the output of said counting means (112);

gating means (114, 115) operatively connected to said pulse generator (107) and to said comparison means (113) for gating said pulse signals in accordance with the output of said comparison means (113) and for providing, as an output, corrective signals for correcting the positional error of the controlled member, said signals indicating a positional error correction in the direction of movement of said controlled member in response to the output of said temporary storage means (106) being greater than the output of said counting means (112), and said signals indicating a positional error correction in the direction opposite to that of the movement of said controlled member in response to the output of said temporary storage means (106) being less than the output of said counting means (112).

5. An arrangement as claimed in claim 2, or claim 3 when read as appended to claim 2, wherein each position error correction circuit (e.g. 17X) comprises reading means (105X, 105Y, 105Z) operable to read out corrective values from the memory means (101X, 101Y, 101Z),

receiving means (110X, Y, Z) for receiving direction signals (MDX, Y, Z) indicating the direction of movement of the controlled member along each control axis;

counting means (106X, Y, Z) operatively connected to a pulse generator circuit (107) and to corresponding ones of said reading means (105X, Y, Z) for counting pulse signals in accordance with the corresponding memory means (101X, Y, Z) and for providing, as an output, a signal dependent on said counting, and

mixing means (108, 109, 111) operatively coupled to said counting means (106X, Y, Z), to each of said reading means (105X, Y, Z), to said pulse generator circuit (107) and to said receiving means (110X, Y, Z) for mixing said pulse signals and said outputs of the counting means (106X, Y, Z) in accordance with said direction signals and the outputs of said reading means (105X, Y, Z) and for providing, as an output, a signal for correcting the positional error of the controlled member on the control axis concerned.

6. An arrangement as claimed in claim 5, wherein each of said reading means (105X, Y, Z) further provides as an output, in accordance with the positional error corrective amount read from the corresponding memory (101X, Y, Z), a signal indicating the direction of positional error correction of the controlled member relative to the direction of movement of the controlled member.

**Patentansprüche**

1. Positionsfehler-Korrekturanordnung zum Korrigieren von Positionsfehlern eines beweglichen Teils, das in Bezug auf zwei Steuerachsen (X, Y, Z) positionsmäßig gesteuert wird, um innerhalb eines Steuerbereichs positioniert zu werden, mit

eine Einrichtung (12, 16X, 16Y, 16Z) zum Anzeigen einer momentanen Position (Xa, Ya, Za) des gesteuerten Teils innerhalb des Steuerbereichs,

einer Positionsfehler-Korrektureinrichtung (17X, 17Y, 17Z) mit einer Speichereinrichtung (101), die bei der Korrektur von Positionsfehlern des gesteuerten Teils in Bezug auf jede der Steuerachsen zu verwendende Korrekturbeträge speichert, wobei die Korrekturbeträge für jede Achse gleichzeitig von der Position (Xa, Ya, Za) des gesteuerten Teils in Bezug auf alle Steuerachsen abhängen, und

einer Einrichtung zum Anlegen der Korrekturbeträge an für die positionsmäßige Steuerung des gesteuerten Teils verantwortliche Hilfsstellantriebe,

dadurch gekennzeichnet, daß

die Positionsfehler-Korrektureinrichtung wenigstens zwei Positionsfehler-Korrekturschaltkreise (17X, 17Y, 17Z) aufweist, für jede Steuerachse einen, wobei die für die Bewegungen des gesteuerten Teils längs einer (z. B. X) der Steurachsen spezifischen Positionsfehler durch einen (z. B. 17X) der Positionsfehler-Korrekturschaltkreise korrigiert werden, und daß

jeder einzelne der Positionsfehler-Korrekturschaltkreise (17X, 17Y, 17Z)

eine Speichereinrichtung (101), welche spezifische korrigierende Beträge speichert, die bei der Korrektur von Positionsfehlern zu verwenden sind, welche für die Bewegung des gesteuerten Teils längs der einen Steuerachse (z. B. X) spezifischen sind, für die der eine Positionsfehler-Korrekturschaltkreis (z. B. 17X) vorgesehen ist, wobei die spezifischen korrigierenden Beträge in der Speichereinrichtung (101) bei spezifischen Adressen gespeichert sind, von denen jede einem jeweiligen spezifischen Unterbereich des Steuerereichs entspricht,

eine Adressenkonvertierungseinrichtung (102), die zur Umwandlung der angezeigten momentanen Position (Xa, Ya, Za) des gesteuerten Teils in die spezifische Speicheradresse betreibbar ist, die zu dem spezifischen Unterbereich korrespondiert, der die angezeigte momentane Position enthält, für den Zugriff zu der Speichereinrichtung (101), um den korrespondieren spezifischen korrigierenden Betrag zu erhalten, aufweist,

wobei zum Zweck des Speicherns der zum Korrigieren von für die Bewegungen des gesteuerten Teils längs jeder jeweiligen eninzelnen der Steuerachsen (X, Y, Z) spezifischen Positionsfehler zu verwenden, spezifischen korrigierenden Beträge in jeder Speichereinrichtung (101) der Steuerbereich in wenigstens zwei Vielheiten von Unterbereichen unterteilt ist, wobei sich jeder der Vielheiten von Unterbereichen so ausdehnt, daß sie den ganzen Steuerbereich enthält,

wobei die Unterbereiche in den wenigstens zwei Vielheiten in Bezug auf ihre Form und/oder geometrische Ausdehnung verschieden voneinander sind,

wobei die wenigstens zwei Vielheiten von Unterbereichen auf diese Weise für wenigstens zwei Unterteilungen des ganzen Steuerbereichs sorgen, die voneinander verschieden sein können, und

wobei die Adressenkonvertierungseinrichtung (102) in den jeweiligen Positionsfehler-Korrekturschaltkreisen (17X, 17Y, 17Z) die anzeigten momentanen Positionen (Xa, Ya, Za) in wenigstens zwei verschiedene spezifische Adressen konvertiert, für jede Steuerachse eine, um in der jeweiligen Speichereinrichtung (101) zu jeden spezifischen korrigierenden Beträgen Zugriff zu haben, die zur Korrektur der Positionsfehler zu verwenden sind, welcher für die Bewegungen des gesteuerten Teils längs der einen (z. B. X) der Steuerachsen spezifisch sind, für welche der Fehlerkorrekturschaltkreis vorgesehen ist.

2. Positionsfehler-Korrekturanordnung zum Korrigieren von Positionsfehlern eines beweglichen Teils, das in Bezug auf zwei Steuerachsen (X, Y, Z) positionsmäßig gesteuert wird, um innerhalb eines Steuerbereichs positioniert zu werden, mit

einer Einrichtung (12, 16X, 16Y, 16Z) zum Anzeigen einer momentanen Position (Xa, Ya, Za) des gesteuerten Teils innerhab des Steuerbereichs,

einer Positionsfehler-Korrektureinrichtung (17X, 17Y, 17Z) mit einer Speichereinrichtung (101X, 101Y, 101Z), die bei der Korrektur von Positionsfehlern des gesteuerten Teils in Bezug auf jede der Steuerachsen zu verwendende Korrekturbeträge speichert, wobei die Korrekturbeträge für jede Achse gleichzeitig von der Position (Xa, Ya,

Za) des gesteuerten Teils in Bezug auf alle Steuerachsen abhängen, und

einer Einrichtung zum Anlegen der Korrekturbeträge an für die positionsmäßige Stuerung des gesteuerten Teils verantwortliche Hilfsstellantriebe (14X, 14Y, 14Z; 15X, 15Y, 15Z), dadurch gekennzeichnet, daß

die Positionsfehler-Korrektureinrichtung wenigstens zwei Positionsfehler-Korrekturschaltkreise) 17X, 17Y, 17Z) aufweist, für jede Steuerachse einen, wobei die für die Bewegungen des gesteuerten Teils längs eine (z. B. X) der Steuerachsen spezifischen Positionsfehler durch einen (z. B. 17X) der Positionsfehler-Korrekturschaltkreise korrigiert werden, und daß

jeder einzelne der Positionsfehler-Korrekturschaltkreise (17X, 17Y, 17Z)

eine Speichereinrichtung (101X, 101Y, 101Z), welche spezifische korrigierende Werte speichert, die bei der Korrektur von Positionsfehlern zu verwenden sind, welche für die Bewegung des gesteuerten Teils längs der einen Steuerachse (z. B. X) spezifisch sind, für die der eine Positionsfehler-Korrekturschaltkreis (z. B. 17X) vorgesehen ist, wobei die spezifischen korrigierenden Beträge in der Speichereinrichtung (101X, 101Y, 101Z) bei spezifischen Adressen gespeichert sind, von denen jede einem jeweiligen spezifischen Segment der Steuerachsen entspricht,

eine Adressenkonvertierungseinrichtung (102X, 102Y, 102Z), die zur Umwandlung der angezeigten momentanen Position (Xa, Ya, Za) in spezifische Sätze von Speicheradressen, für jede Steuerachse ein Satz, betreibbar ist, die zu dem spezifischen Segment der Steurachse korrespondiert, das die angezeigte momentane Position enthält, für den Zugriff zu der Speichereinrichtung (101X, 101Y, 101Z), um den korrespondierenden spezifischen korrigierenden Wert zu erhalten, und

eine Einrichtung (111), die betreibbar ist, um die spezifischen korrigierenden Werte zur Erzeugung eines spezifischen korrigierenden Betrages zu kombinieren, aufweist,

wobei zum Zweck des Speicherns der zum Korrigieren von für die Bewegungen des gesteuerten teils längs jeder jeweiligen einzelnen der Steuerachsen (X, Y, Z) spezifischen Positionsfehler zu verwenden, zur Erzeugung der spezifischen korrigierenden Beträge zu kombinierenden, spezifischen korrigierenden Werte in jeder Speichereinrichtung (101X, 101Y, 101Z) die Länge jeder in dem Steuerbereich enthaltenen Steuerachse in wenigstens zwei Vielheiten von Segmenten unterteilt ist,

wobei in jeder der wenigstens zwei Vielheiten die Segmente in Bezug auf ihre Länge verschieden voneinander sind und längs jeder einzelnen der Steuerachsen in einer Ordnung angeordnet sind, die von einer Vielheit auf die andere verschieden sein kann, so daß der Steuerbereich in wenigstens zwei Vielheiten von Unterbereichen unterteilt ist, wobei sich jede der Vielheiten von Unterbereichen so ausdehnt, daß sie den ganzen Steuerbereich enthält,

wobei die Unterbereiche in jeder der wenigstens zwei Vielheiten in Bezug auf ihre Form einander ähnlich, aber in Bezug auf ihre geometrische Ausdehnung voneinander verschieden sind,

wobei die wenigstens zwei Veilheiten von Unterbereichen auf diese Weise für wenigstens zwei Unterteilungen des ganzen Steuerbereichs sorgen, die voneinander verschieden sein können, und

wobei die Adressenkonvertierungseinrichtung (102X, 102Y, 102Z) in den jeweiligen Positionsfehler-Korrekturschaltkreisen (17X, 17Y, 17Z) die angezeigten momentanen Positionen (Xa, Ya, Za) in wenigstens zwei verschiedene Sätze spezifischer Adressen konvertiert, für jede Steuerachse eine Adresse in jedem Satz, um in dr jeweiligen Speichereinrichtung (101X, 101Y, 101Z) zu jenen spezifischen, zur Erzeugung des spezifischen korrigierenden Betrags zu kombinierenden, korrigierenden Werten Zugriff zu haben, die bei der Korrektur der Positionsfehler zu verwenden sind, welche für die Bewegungen des gesteuerten Teils längs der einen Steuerachse (z. B. X) spezifisch sind, für welche der Fehlerkorrekturschaltkreis vorgesehen ist.

3. Anordnung nach Anspruch 1 oder 2, wobei das gesteurte Teil in Bezug auf drei Steuerachsen (X, Y, Z) positionsmäßig gesteuert ist, der Steuerbereich dreidimensinal ist und drei Positionsfehler-Korrekturschaltkreise (17X, 17Y, 17Z) vorgehsen sind.

4. Anordnung nach Anspruch 1 oder Anspruch 3 in Verbindung mit Anspruch 1, wobei jeder Positionsfehler-Korrekturschaltkreis (z. B. 17X)

eine Leseeinrichtung (105), die zum Auslesen korrigierender Beträge aus der Speichereinrichtung (101) betreibbar ist,

eine operative mit der Leseeinrichtung (105) verbunden zeitwelige Speichereinrichtung (106) zum zeitweiligen Speichern jedes aus dem Speicher (101) ausgelesenen korrigierenden Betrages und zum Erzeugen eines den gespeicherten korrigierenden Betrag anzeigenden Signals als ein Ausgangsinformation,

einen Impulsgeneratorschaltkreis (107),

eine operativ mit dem Impulsgeneratorschaltkreis (107) verbunden Zähleinrichtung (112) zum Zählen von Impulsionssignalen aus diesem und Erzeugen eines die Zählung anzeigenden Signals als Ausgangsinformation,

eine operative mit der zeitweiligen Speichereinrichtung (106) und der Zähleinrichtung (112) verbunden Vergleichseinrichtung (113) zum Vergleichen ihrer usgangsinformation und Erzeugen eines Signals als Ausgangsinformation, das anzeigt, ob die Ausgangsinformation der zeitweiligen Speichereinrichtung (106) größer oder kleiner als die Ausgangsinformation der Zähleinrichtung (112) ist,

eine operative mit dem Impulsgenerator (107) und der Vergleichseinrichtung (113) verbundene Verknüpfungseinrichtung (114, 115), zum Verknüpfen der Impulssignale in Übereinstimmung mit der Ausgangsinformation der Vergleichseinrichtung (113) und zum Erzeugen eines korrigierenden Signals zum Korrigiereren des Positionsfehlers des gesteuerten Teils als Ausgangssignal aufweist, wobei die Signale eine Positionsfehlerkorrektur in Richtung der Bewegung des gesteuerten Teils anzeigen, wenn die Ausgangsinformation der zeitweiligen Speichereinrichtung (106) größer ist als die Ausgangsinformation der Zähleinrichtung (112) und wobei die Signale eine Positionsfehlerkorrektur in der Gegenrichtung zu der der Bewegung des gesteuerten Teils anzeigen, wenn die Ausgangsinformation der zeitweiligen Speichereinrichtung (106) kleiner ist als die Ausgangsinformation der Zähleinrichtung (112).

5. Anordnung nach Anspruch 2 oder nach Anspruch 3 in Verbindung mit Anspruch 2, wobei jeder Positionsfehler-Korrekturschaltkreis (z. B. 17X)

Leseeinrichtungen (105X, 105Y, 105Z), die zum Auslesen korrigierender Werte aus der Speichereinrichtung (101X, 101Y, 101Z) betreibbar sind,

eine Empfangseinrichtung (110X, Y, Z) zum Empfang von Richtungssignalen (MDX, Y, Z), welche die Richtung der Bewegung des gesteuerten Teils längs jeder Steuerachse anzeigen,

eine operativ mit einem Impulsgeneratorschaltkreis (107) und korrespondierenden der Leseeinrichtungen (105X, Y, Z) verbundene Zähleinrichtung (106X, Y, Z) zum Zählen von Impulssignalen in Übereinstimmung mit der korrespondierenden Speichereinrichtung (101X, Y, Z) und zum Erzeugen eines von der Zählung abhängigen Signals als Ausgangsinformation, und

eine operativan die Zähleinrichtung (106X, Y, Z), an jede der Leseeinrichtungen (105X, Y, Z), an den Impulsgeneratorschaltkreis (107) und an die Empfangseinrichtung (110X, Y, Z) gekoppelte Mischeinrichtung (108, 109, 111) zum Mischen der Impulssignale und der Ausgangsinformationen der Zähleinrichtung (106X, Y, Z) in Übereinstimmung mit den Richtungssignalen und den Ausgangsinformationen der Leseeinrichtungen (105X, Y, Z) und zum Erzeugen eines Signals zum Korrigieren des Positionsfehlers des gesteuerten Teils auf der betreffenden Stuerachse als Ausgangsinformation.

6. Anordnung nach Anspruch 5, wobei jeder der Leseeinrichtungen (105X, Y, Z) des weiteren in Übereinstimmungen mit dem aus dem korrespondierenden Speicher (101X, Y, Z) gelesenen, Positionsfehler korrigierenden Betrag ein Signal als Ausgangsinformation erzeugt, das die Richtung der Positionsfehlerkorrektur des gesteuerten Teils relativ zur richtung der Bewegung des gesteuerten Teils anzeigt.

**Revendications**

1. Un dispositif de correction d'erreur de position, pour corriger les erreurs de position d'un organe mobile, dont la position est commandée par rapport à deux axes de commande (X, Y, Z), afin de le positionner dans une région de commande, comprenant:

—un moyen (12, 16X, 16Y, 16Z) pour indiquer une position instantanée (Xa, Ya, Za) de l'organe commandé dans la région de commande,

—un moyen de correction d'erreur de position (17X, 17Y, 17Z) comprenant des mémoires (101) qui stockent des facteurs de correction à utiliser dans la correction des erreurs de position dudit organe commandé par rapport à chacun des axes de commande, lesdits facteurs de correction pour chaque axe dépendant simultanément de la position (Xa, Ya, Za) dudit organe commandé par rapport à tous les axes de commande, et

—un moyen pour appliquer lesdits facteurs de correction à des servocommandes chargées de commander en position ledit organe commandé,

caractérisé en ce que

le moyen de correction d'erreur de position comprend au moins deux circuits de correction d'erreur de position (17X, 17Y, 17Z), un pour chaque axe de commande, de sorte que les erreurs de position spécifiques aux déplacements dudit organe commandé le long de l'une desdits axes de commande (par exemple X) sont corrigées au moyen de l'un desdits circuits de correction d'erreur de position (par exemple 17X),

et en ce que

chacun desdits circuits de correction d'erreur de position (17X, 17Y, 17Z) comprend:

—une mémoire (101) stockant des facteurs de correction spécifiques à utiliser dans la correction des erreurs de position spécifies aux déplacements dudit organe commandé le long de l'axe de commande (par exemple X) pour lequel ledit circuit de correction d'erreur de position par exemple (17X) est prévu, lesdits facteurs de correction spécifiques étant stockés dans ladite mémoire (101) à des adresses spécifiques correspondant chacune à une sous-région spécifique respective de ladite région de commande,

—un convertisseur d'adresse (102) actionnable pour convertir la position instantanée indiquée (Xa, Ya, Za) dudit organe de commande en l'adresse de mémoire spécifique correspondant à la sous-région spécifique qui comprend ladite position instantanée indiquée, afin d'accéder à ladite mémoir (101) pour obtenir ledit facteur de correction spécifique correspondant,

de sorte que, dans le but de stocker dans chacune desdites mémoires (101) lesdits facteurs de correction spécifiques à utiliser pour corriger les erreurs de position spécifiques aux déplacements dudit organe commandé le long de chacun respectivement desdits axes de commande (X, Y, Z), ladite région de commande est divisée en au moins deux ensembles de sous-régions, chacun desdits ensembles de sous-régions incluant la région de commande entière,

lesdites sous-régions dans lesdits au moins deux ensembles étant différentes les unes des autres au point de vue de leur taille et/ou de leur étendue géométrique,

lesdits au moins deux ensembles de sous-régions formant donc au moins deux subdivision de la région de commande entière qui peuvent être différentes entre elles,

et de sorte que lesdits convertisseurs d'adresse (102) dans les circuits de correction d'erreur de position respectifs (17X, 17Y, 17Z) convertissent ladite position instantanée indiquée (Xa, Ya, Za) en au moins deux adresses spécifiques différentes, l'une pour chaque axe de commande, pour accéder, dans les mémoires respectives (101), à ces facteurs de correction spécifiques à utiliser pour corriger lesdites erreurs de position spécifiques aux déplacements dudit organe commandé le long de celui desdits axes de commande (par exemple X) pour lequel le circuit de correction d'erreur concerné (par exemple 17X) est prévu.

2. Un dispositif de correction d'erreur de position, pour corriger les erreurs de position d'un organe mobile qui est commandé en position par rapport à deux axes de commande, afin de le positionner dans une région de commande, comprenant:

—un moyen (12, 16X, 16Y, 16Z) pour indiquer une position instantanée (Xa, Ya, Za) de l'organe commandé dans la région de commande,

—un moyen de correction d'erreur de position (17X, 17Y, 17Z) comportant des mémoires (101X, 101Y, 101Z) stockant des facteurs de correction à utiliser dans la correction d'erreurs de position dudit organe commandé par rapport à chacun des axes de commande, lesdits facteurs de correction pour chaque axe dépendant simultanément de la position (Xa, Ya, Za) dudit organe commandé par rapport à tous les axes de commande, et

—un moyen pour appliquer lesdits facteurs de correction à des servocommandes (14X, 14Y, 14Z; 15X, 15Y, 15Z) chargées de commander en position ledit organe mobile,

caractérisé en ce que

le moyen de correction d'erreur de position comprend au moins deux circuits de correction d'erreur de position (17X, 17Y, 17Z), un pour chaque axe de commande, de sorte que les erreurs de position spécifiques aux déplacements dudit organe commandé le long d'un desdits axes de commande (par exemple X) sont corrigées par l'intermédiaire de l'un desdits circuits de correction d'erreur de position (par exemple (17X),

et en ce que

chacun desdits circuits de correction d'erreur de position (17X, 17Y, 17Z) comprend:

—des mémoires (101X, 101Y, 101Z) stockant des valeurs de correction spécifiques à utiliser dans la correction d'erreurs de position spécifiques aux déplacements dudit organe commandé le long dudit axe de commande (par exemple X) pour lequel ledit circuit de correction d'erreur de position (par exemple 17X) est prévu, lesdites valeurs de correction spécifiques étant stockées dans lesdits mémoires (101X, 101Y, 101Z) à des adresses spécifiques correspondant chacune à un segment respectif spécifique de chacun des axes de commande,

—des convertisseurs d'adresse (102X, 102Y, 102Z) actionnables pour convertir la position instantanée indiquée (Xa, Ya, Za) en jeux spécifiques d'adresses de mémoire, un jeu pour chaque axe de commande, correspondant au segment spécifique de l'axe de commande que comprend ladite position instantanée indiquée, afin d'accéder auxdites mémoires (101X, 101Y, 101Z) pour obtenir les valeurs de correction spécifiques correspondantes, et

—un moyen (111) actionnable pour combiner lesdites valeurs de correction spécifiques, pour produire un facteur de correction spécifique,

de sorte que, dans le but de stocker dans chacune desdites mémoires (101X, 101Y, 101Z) lesdits valeurs de corrections spécifiques à combiner pour produire ledit facteur de correction spécifique à utiliser pour corriger les erreurs de position spécifiques aux déplacements dudit organe commandé le long de chacun desdits axes de commande (X, Y, Z), respectivement, la longueur de chacun desdits axes de commande comprise dans ladite région de commande est subdivisée en au moins deux ensembles de segments,

lesdits segments, dans chacun desdits au moins deux ensembles, étant différents les uns des autres au point de vue de leur longueur et étant disposés, le long de chaque axe de commande, dans un ordre qui peut être différent d'un ensemble à l'autre, de sorte que ladite région de commande est subdivisée en au moins deux ensembles de sous-régions, chacune desdits ensembles de sous-régions comprenant la région de commande entière,

lesdites sous-régions, dans chacun desdits au moins deux ensembles, étant semblables entre elles au point de vue de leur forme, mais différentes l'une de l'autre au point de vue de leur étendue géométrique,

lesdits au moins deux ensembles de sous-régions formant donc au moins deux subdivisions de la région de commande entière qui peuvent être différentes entre alles,

et de sorte que lesdits convertisseurs d'adresse (102X, 102Y, 102Z), dans les circuits de correction d'erreur de position (17X, 17Y, 17Z), convertissent ladite position instantanée indiquée (Xa, Ya, Za) en au moins deux jeux différents d'adresses spécifiques, une adresse dans chaque jeu pour chaque axe de commande, pour accéder, dans les mémoires respectives (101X, 101Y, 101Z), aux valeurs de correction spécifiques à combiner pour produire le facteur de correction spécifique à utiliser dans la correction desdites erreurs de position spécifiques aux déplacements dudit organe commandé le long de celui desdits axes de commande (par exemple X) pour lequel le circuit de correction d'erreur de position concerné (par exemple 17X) est prévu.

3. Un dispositif selon la revendication 1 ou 2, dans lequel l'organe command est commandé en position par rapport à trois axes de commande (X, Y, Z), la région de commande est à trois dimensions, et il est prévu trois circuits de correction d'erreur de position (17X, 17Y, 17Z).

4. Un dispositif selon la revendication 1, ou la revendication 3 en tant que dépendante de la revendication 1, dans lequel chaque circuit de correction d'erreur de position (par exemple 17X) comprend:

—un moyen de lecture (105) actionnable pour lire des facteurs de correction dans la mémoire (101),

—un moyen de mémorisation temporaire (106) relié en fonctionnement audit moyen de lecture (105) pour mémoriser temporairement chaque facteur de correction lu dans la mémoire (101) et pour produire, en sortie, un signal indicatif du facteur de correction mémorisé,

—un circuit générateur d'impulsions (107),

—un compteur (112) relié en fonctionnement audit circuit générateur d'impulsions (107) pour compter des signaux d'impulsion provenant de ce dernier et produire, en sortie, un signal indicatif du compte,

—un moyen de comparaison (113) relié en fonctionnement audit moyen de mémorisation temporaire (106) et audit compteur (112) pour comparer leurs sorties et produire, en sortie, un signal indiquant si la sortie du moyen de mémorisation temporaire (106) est supérieure ou inférieure à la sortie dudit compteur (112),

—un moyen à. portes (114, 115) relié en fonctionnement audit générateur d'impulsions (107) et audit moyen de comparaison (113) pour faire passer lesdits signaux d'impulsion en fonction de la sortie dudit moyen de comparaison (113) et pour produire, en sortie, des signaux de correction pour corriger l'erreur de position de l'organe commandé, lesdits signaux indiquant une correction d'erreur de position dans le sens de déplacement dudit organe commandé si la sortie dudit moyen de mémorisation temporaire (106) est plus grande que la sortie dudit compteur (112), et lesdits signaux indiquant une correction d'erreur de position dans le sens opposé à celui du déplacement dudit organe commandé si la sortie dudit moyen de mémorisation temporaire (106) est inférieure à la sortie dudit compteur (112).

5. Un dispositif selon la revendication 2, ou la revendication 3 en tant que dépendante de la revendication 2, dans lequel chaque circuit de correction d'erreur de position (par exemple 17X) comprend des moyens de lecture (105X, 105Y, 105Z) actionnables pour lire des valeurs de correction dans les mémoires (101X, 101Y, 101Z),

—des moyens de réception (110X, Y, Z) pour recevoir des signaux de sens (MDX, Y, Z) indiquant le sens de déplacement de l'organe commandé le long de chaque axe de commande,

—des compteurs (106X, Y, Z) reliés en fonctionnement à un circuit générateur d'impulsions (107) et auxdits moyens de lecture correspondants (105X, Y, Z) pour compter des signaux d'impulsion conformément aux mémoires correspondantes (101X, Y, Z) et pour produire, en sortie, un signal dépendant dudit comptage, et

—un mélanger (108, 109, 111) relié en fonctionnement auxdits compteurs (106X, Y, Z), à chacun desdits moyens de lecture (105X, Y, Z), audit circuit générateur d'impulsions (107) et auxdits moyens de réception (110X, Y, Z) pour mélanger lesdits signaux d'impulsion et lesdites sorties des compteurs (106X, Y, Z) en fonction desdits signaux de sens et des sorties desdits moyens de lecture (105X, Y, Z), et pour produire, en sortie, un signal pour corriger l'erreur de position de l'organe commandé sur l'axe de commande concerné.

6. Un dispositif selon la revendication 5, dans lequel chacun desdits moyens de lecture (105X, Y, Z) produit en outre, en sortie, en fonction du facteur de correction d'erreur de position lu dans la mémoire correspondante (101X, Y, Z), un signal indiquant le sens de la correction de l'erreur de position de l'organe commandé par rapport au sens du déplacement de l'organe commandé.

Fig. 1

# Fig. 2

# Fig. 3